## Europäisches Patentamt
## European Patent Office
## Office européen des brevets

(11) Numéro de publication: **0 002 081**
**B2**

(12) # NOUVEAU FASCICULE DE BREVET EUROPÉEN

(45) Date de publication du nouveau fascicule du brevet:
29.03.89

(51) Int. Cl.⁴: **F 16 K 11/085**, F 16 K 21/06

(21) Numéro de dépôt: 78200285.1

(22) Date de dépôt: 02.11.78

(54) Robinet mélangeur à fermeture temporisée.

(30) Priorité: 23.11.77 FR 7735147

(43) Date de publication de la demande:
30.05.79 Bulletin 79/11

(45) Mention de la délivrance du brevet:
02.09.81 Bulletin 81/35

(45) Mention de la decision concernant l'opposition:
29.03.89 Bulletin 89/13

(84) Etats contractants désignés:
BE CH DE GB LU NL SE

(56) Documents cité:
DE-A-2 347 524
DE-A-2 543 112
FR-A-475 993
FR-A-545 077
FR-A-1 208 099
US-A-1 517 990
US-A-2 596 464
US-A-2 722 236
US-A-2 988 110

(73) Titulaire: **LES ROBINETS PRESTO Société anonyme dite:, 7, rue Racine, F-92120 Montrouge (FR)**

(72) Inventeur: **Patient, Lucien, 7, rue Racine, F-92000 Montrouge (FR)**

(74) Mandataire: **Vander- Heym, Roger, 172 Boulevard Voltaire, F-75011 Paris (FR)**

EP 0 002 081 B2

## Description

La présente invention est relative aux robinets mélangeurs et, plus particulièrement, aux robinets mélangeurs temporisés.

Il est connu, par le brevet FR-A-545 077, de réaliser un robinet mélangeur dans lequel les canalisations d'arrivée d'eau chaude et d'eau froide débouchaient dans une chambre de mélange constituée par un boisseau susceptible, par sa rotation, d'obturer lesdites canalisations, ledit boisseau présentant un orifice axial de sortie normalement obturé par un clapet.

Il est également connu par le brevet FR-A-1 208 099 de réaliser un robinet à fermeture temporisée comportant un clapet lié en translation à un piston mobile dans une chambre de temporisation communiquant, par l'entremise d'un orifice calibré dudit piston, avec l'arrivée d'eau et, par l'entremise d'un clapet auxiliaire, avec l'extérieur du robinet.

Par le DE-A-2 543 112 on connaît, aussi, un robinet mélangeur comportant un dispositif de temporisation. Un tel robinet est particulièrement compliqué à fabriquer car les organes permettant d'effectuer soit le mélange soit la temporisation ne coopèrent pas entre eux, d'où la nécessité d'un grand nombre de pièces. De plus, la conception du dispositif de temporisation fait appel à des matériaux dont la fiabilité peut être mise en doute.

La présente invention est relative à un robinet mélangeur comportant deux canalisations d'arrivée respectivement pour de l'eau chaude et pour de l'eau froide, débouchant dans une chambre de mélange, un boisseau de mélange susceptible par une rotation d'obturer l'une ou l'autre desdites canalisations d'arrivée et une chambre de temporisation pour un dispositif de temporisation comportant un cylindre de temporisation dans lequel peut se déplacer un élément de temporisation qui porte le clapet du robinet, dans lequel robinet le boisseau de mélange est situé dans la prolongation du cylindre de temporisation, le boisseau de mélange et le cylindre de temporisation étant physiquement distincts, dans lequel le cylindre de temporisation présente à l'une de ses extrémités des doigts pouvant s'engager dans des encoches du boisseau de mélange pour transmettre la commande de rotation au boisseau de mélange et, à son autre extrémité une queue s'étendant hors du corps du robinet pour recevoir une tête de commande en rotation dans lequel le boisseau de mélange presente une tubulure coaxiale intérieure qui forme le siège du robinet et qui est normalement obturée par le clapet, dans lequel la chambre de mélange est constituée essentiellement par un espace annulaire entre le boisseau de mélange et sa tubulure coaxiale et dans lequel l'élément de temporisation est un piston qui est guide dans le cylindre de temporisation et qui fait communiquer la chambre de temporisation et la chambre de mélange.

L'invention sera mieux comprise par la description qui va suivre faite en se référant aux dessins annexés à titre d'exemple indicatif seulement sur lesquel:

La figure 1 est une vue en coupe du robinet en position de fermeture;

La figure 2 est une vue analogue à la figure 1, le robinet étant en position d'ouverture et le boisseau de réglage du mélange ayant subi une rotation de 180°;

La figure 3 est une vue partielle en coupe effectuée selon la ligne III - III de la figure 1;

La figure 4 est une demi-vue de gauche et une coupe IV - IV de la figure 1;

Les figures 5, 6 et 7 sont des vues partielles, en perspective éclatée, montrant des détails de réalisation.

En se reportant aux dessins, on voit que le robinet se compose d'un corps, en deux parties 1 et 2 assemblées par un écrou 3 et pouvant se monter sur une embase murale 4.

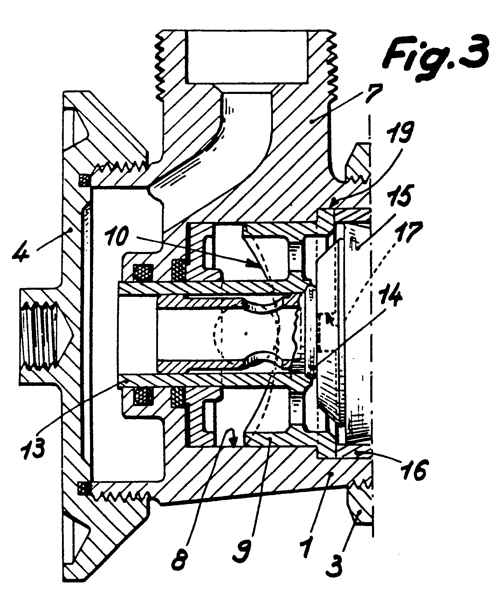

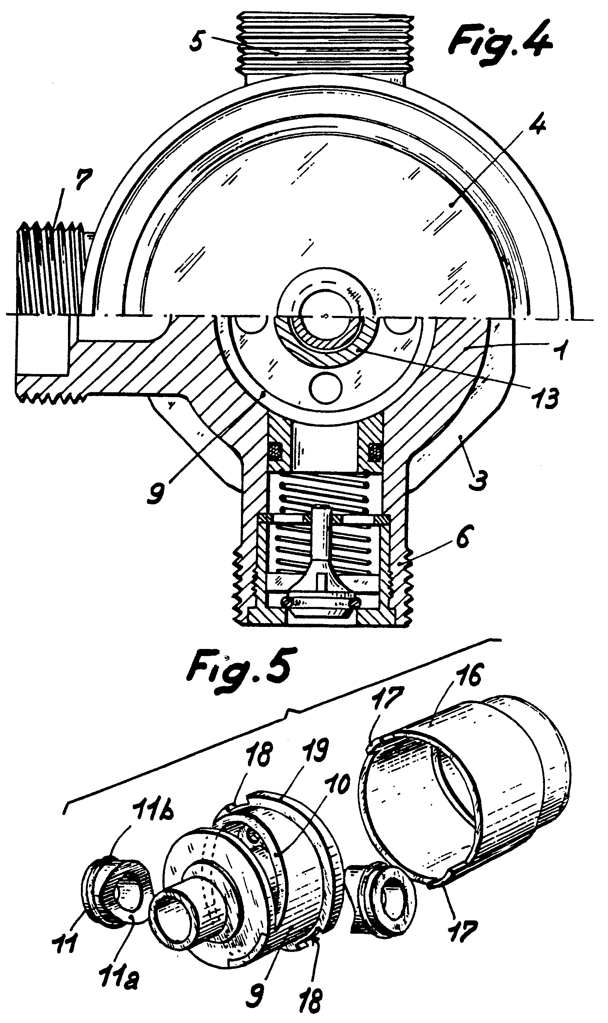

La partie 1 présente deux embouts 5 et 6 d'arrivée respectivement de l'eau chaude et de l'eau froide et un embout 7 de sortie de l'eau mélangée ( figures 3 et 4).

Les deux embouts 5 et 6 débouchent dans un alésage 8 cylindrique de la partie 1 (figure 3) dans lequel est logé et peut tourner un boisseau cylindrique 9 présentant une lumière 10 oblique. Le boisseau 9 est réalisé de préférence en deux parties et la lumière affecte la forme montrée sur les dessins et, notamment, sur la figure 5.

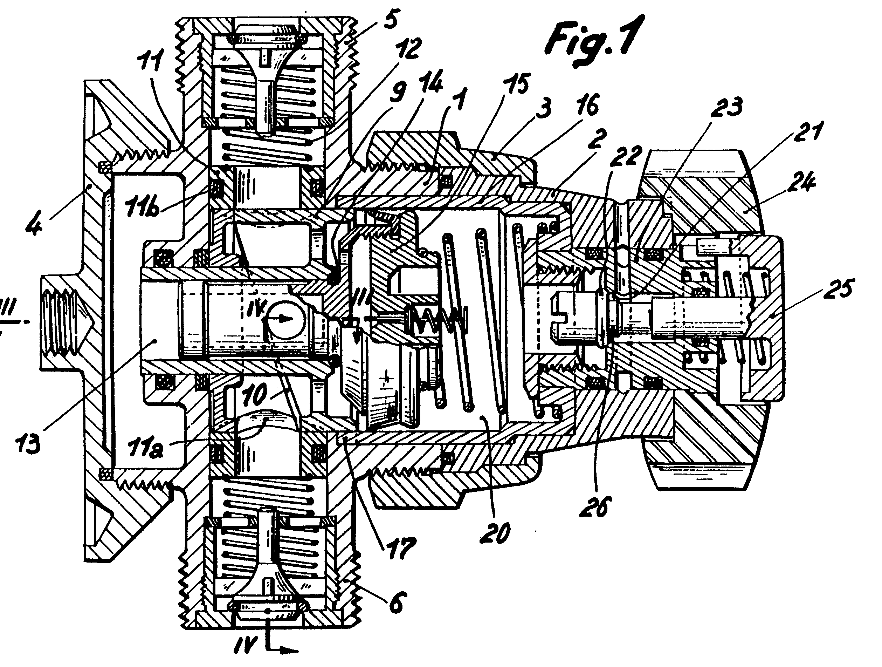

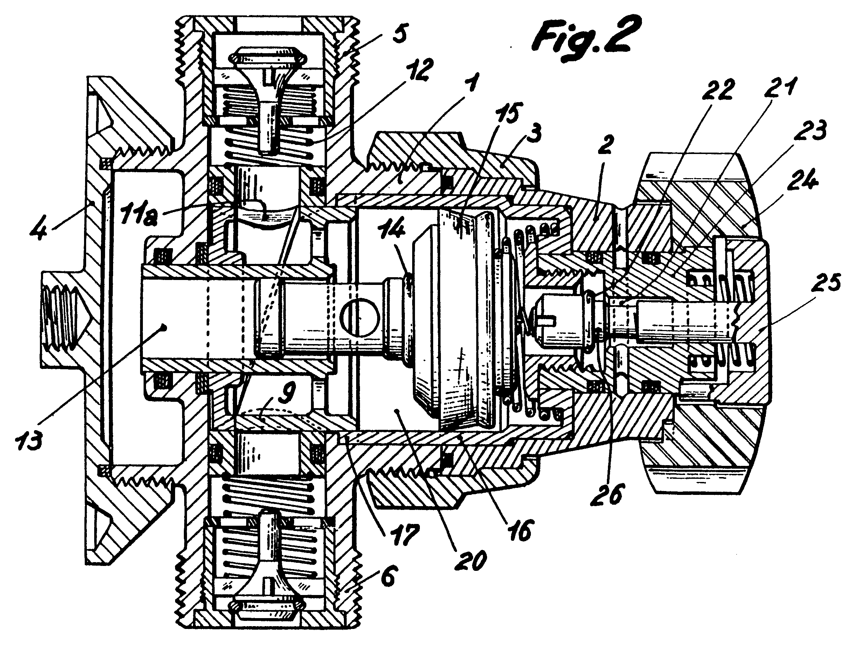

Comme montre sur les figures 1 et 2, il est possible, par une rotation de 180° du boisseau 9, d'obturer l'une ou l'autre des arrivées d'eau 5 et 6. Lorsque le boisseau est dans la position représentée sur la figure 1, par exemple, il faut empêcher l'infiltration de l'eau entre la périphérie externe du boisseau 9 et l'alésage 8 car si cette infiltration avait lieu, l'eau pénétrerait par la lumière 10 dans la chambre de mélange constituée par la partie intérieure dudit boisseau.

De la façon connue, ce résultat est obtenu à l'aide d'un grain 11, percé axialement, appliqué en pression contre le boisseau 9 et dont l'extrémité en contact avec ledit boisseau épouse étroitement le profil de ce dernier.

Dans l'exemple représenté, l'extrémité 11a de chaque grain en contact avec le boisseau présente une surface cylindro-concave et est appliquée contre ce dernier par l'entremise d'un ressort 12.

L'étanchéité entre chaque grain et l'alésage interne des embouts 5 - 6 s'effectue, par exemple, à l'aide d'un joint torique 11b.

De cette façon, le boisseau 9 peut être engagé très librement dans l'alésage 8.

Selon l'invention, le boisseau 9 présente une tubulure axiale 13 normalement obturée par un clapet 14. Lorsque le clapet 14 est soulevé, l'eau mitigée emprunte la tubulure 13 et est évacuée par l'embout 7 (figure 3).

Le clapet 14 est porté par un piston 15 mobile dans un cylindre 16 lié en rotation au boisseau 9. Selon un mode de réalisation le cylindre 16 présente deux doigts 17 pouvant s'engager dans deux encoches correspondantes 18 de la collerette 19 du boisseau 9 (figure 5).

De la façon connue, le cylindre 16 constitue celui usuel d'un mécanisme de temporisation dont la chambre de temporisation 20 peut communiquer avec l'extérieur par l'entremise d'un orifice 21 normalement obturé par un clapet auxiliaire 22.

Selon l'invention, le cylindre 16 est rendu solidaire d'une queue 23, portant le clapet auxiliare 22, traversant la partie 2 du corps dans laquelle elle peut pivoter.

La queue 23 est rendue solidaire d'une tête de manoeuvre 24 comportant en son centre un bouton poussoir 25 rendu solidaire de la tige 26 du clapet 22.

La rotation de la tête 24 détermine celle de tout le dispositif de temporisation et par suite celle du boisseau 9.

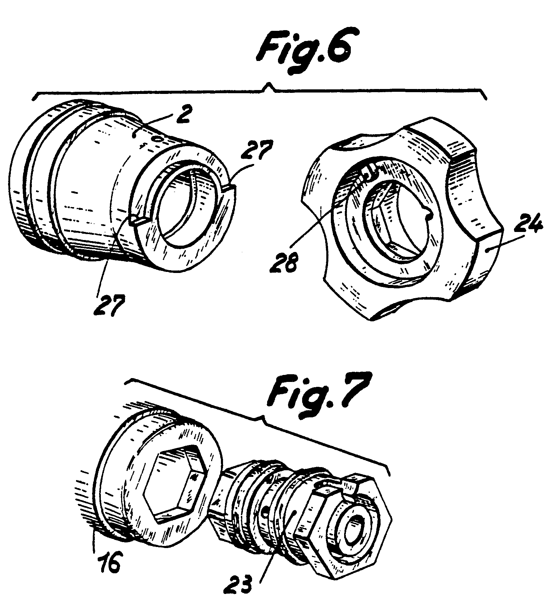

La rotation de la tête 24 est limitée à 180°. Un tel résultat est obtenu, par exemple, en prévoyant sur la partie 2 du corps deux butées 27 diamétralement opposées et sur ladite tête un doigt 28 comme montré sur la figure 6.

**Revendications**

1. Robinet mélangeur à fermeture temporisée comportant deux canalisations d'arrivée (5, 6) respectivement pour de l'eau chaude et pour de l'eau froide, débouchant dans une chambre de mélange, un boisseau de mélange (9) susceptible par une rotation d'obturer l'une ou l'autre desdites canalisations d'arrivée (5, 6) et une chambre de temporisation (20) pour un dispositif de temporisation comportant un cylindre de temporisation (16) dans lequel peut se déplacer un élément de temporisation qui porte le clapet (14) du robinet, dans lequel robinet le boisseau de mélange (9) est situé dans la prolongation du cylindre de temporisation (16) le boisseau de mélange (9) et le cylindre de temporisation (16) étant physiquement distincts, dans lequel le cylindre de temporisation (16) présente à l'une de ses extrémités des doigts (17) pouvant s'engager dans des encoches (18) du boisseau de mélange (9), pour transmettre la commande de rotation au boisseau de mélange (9) et, à son autre extrémité une queue (23) s'étendant hors du corps (1, 2) du robinet pour recevoir une tête de commande en rotation (24), dans lequel le boisseau de mélange (9) présente une tubulure coaxiale (13) intérieure qui forme le siège du robinet et qui est normalement obturée par le clapet (14) dans lequel la chambre de mélange est constituée essentiellement par un espace annulaire entre le boisseau de mélange (9) et sa tubulure coaxiale (13) et dans lequel l'élément de temporisation est un piston (15) qui est guidé dans le cylindre de temporisation (16) et qui fait communiquer la chambre de temporisation (20) et la chambre de mélange.

2. Robinet mélangeur selon la revendication 1, caractérisé en ce que la chambre de temporisation (20) communique avec l'extérieur par l'entremise d'un clapet auxiliaire (22) porté par la queue (23) et rendu solidaire d'un bouton poussoir (25) de commande logé au centre de la tête de manoeuvre (24).

**Patentansprüche**

1. Mischhahn mit Schließverzögerung, mit zwei Zuleitungen (5, 6) für Heiß- und Kaltwasser, die in eine Mischkammer führen, einem Hahnkegel (9), der durch entsprechende Drehung eine der beiden Zuleitungen (5, 6) verschließt, sowie einer Verzögerungskammer (20) zur Aufnahme einer Verzögerungsvorrichtung, die aus einem Verzögerungszylinder (16) besteht, in dem sich ein Verzögerungkolben hin- und herbewegen kann, auf dem das Verschlußventil (14) des Hahnes angebracht ist, wobei der Hahnkegel (9) in der Verlängerung des Verzögerungszylinders (16) liegt und von diesem physisch getrennt ist, in welcher Mischkam mer der Verzögerungszylinder (16) an einem Ende Zapfen (17) aufweist, die in die Vertiefungen (18) des Mischkegels (9) passen, um die Drehbewegung des Hahnkegels (9) zu übertragen, und am anderen Ende ein Endstück (23) aufweist, der aus dem Gehäuse (1, 2) des Hahnes herausragt, um darauf einen Bedienungsknopf (24) anzubringen, wobei der Hahnkegel einen parallel zur Hahnachse liegenden Rohrstutzen (13) darstellt, in welchem das Verzögerungsteil in Form eines Kolbens (15) sich in dem Verzögerungszylinder hin- und herbewegt, wobei der Kolben durch den Verzögerungszylinder (9) geführt wird und die Verbindung zwischen Verzögerungskammer (20) und Mischkammer herstellt.

2. Mischhahn entsprechend Patentanspruch 1, dadurch gekennzeichnet, daß die Verzögerungskammer über ein Hilfsventil (22) eine Öffnung nach außen besitzt, wobei dieses Zusatzventil von dem Endstück (23) gehalten wird und fest mit einem Steurdruckknopf (25) in der Mitte des Bedienungsknopfes (24) verbunden ist.

**Claims**

1. Mixing cock with timed closure comprising two inlet pipings (5, 6) respectively for hot water and cold water, leading to a mixing chamber, a mixing plug (9) capable by rotation of plugging up one or other of said inlet pipings (5, 6) and a timing chamber (20) for a timing device comprising a timing cylinder (16) in which a timing element can move which carries the valve (14) of the cock, in which cock the mixing plug (9) is situated in the extension of the timing cylinder (16), the mixing plug (9) and the timing cylinder (16) being physically distinct, in which the timing cylinder (16) has at one of its ends fingers (17) engageable in notches (18) of the mixing plug (9) for transmitting the rotational control to the mixing plug (9) and, at its other end, a tail (23) extending out of the body (1, 2) of the cock for accommodating a rotational control head (24), in which the mixing plug (9) has a coaxial internal pipe (13) which forms the seat of the cock and which is normally closed by the valve (14), in which the mixing chamber is formed essentially by an annular space between the mixing plug (9) and its coaxial pipe (13) and in which the timing element is a piston (15) which is guided in the timing cylinder (16) and which causes the timing chamber (20) and the mixing chamber to communicate.

2. Mixing cock according to claim 1, characterized in that the timing chamber (20) communicates with the outside by means of an auxiliary valve (22) carried by the tail (23) and made integral with a control push-button (25) housed in the centre of the control head (24).

Fig.1

Fig.2

Fig.3

Fig.4

Fig.5

## Fig.6

## Fig.7